# EUROPEAN PATENT SPECIFICATION

(11) **EP 0 977 808 B1**
(45) Date of publication and mention of the grant of the patent: **16.10.2002**
(21) Application number: 98918619.2
(22) Date of filing: 23.04.1998
(51) Int. Cl.: C08L 23/14, C08F 210/06

(54) **AMORPHOUS PROPYLENE-POLYENE COPOLYMERS AND COMPOSITIONS THEREOF**
AMORPHE PROPYLEN-POLYEN COPOLYMERE UND DIESE ENTHALTENDE ZUSAMMENSETZUNGEN
COPOLYMERES AMORPHES DE PROPYLENE-POLYENE ET COMPOSITIONS CONNEXES

(30) Priority: 29.04.1997 US 44410 P
(43) Date of publication of application: 09.02.2000
(73) Proprietor: THE DOW CHEMICAL COMPANY, Midland, Michigan 48674 (US)
(72) Inventor: KOOPMANS, Rudolf, B-9150 Kruibeke (BE); VAN DER HEIJDEN, Lambertus, P., P., M., NL-4535 GL Terneuzen (NL); THOEN, Johan, A., NL-4535 HB Terneuzen (NL); ANSEMS, Patricia, West Columbia, TX 77486 (US); LINK, Bernie, A., Midland, MI 48642 (US)
(74) Representative: Böhm, Brigitte, Dipl.-Chem. Dr.
(86) International application number: US9808181
(87) International publication number: WO98049229

(56) References cited:
- EP-A- 0 401 993
- EP-A- 0 420 160
- WO-A-97/01586
- WO-A-97/18084

## Description

This invention relates to polymers of polypropylene, particularly those polymers of polypropylene which are amorphous.

Traditionally, amorphous polypropylene is formed as a by-product of the production of isotactic polypropylene via Ziegler-Natta catalysis. The term amorphous refers to the absence of crystallinity in the polymer; for polypropylene homopolymer this means that the polymer is atactic, without any isotactic segments giving rise to crystallinity, as can be determined by the absence of a melting point and a heat of fusion of 0 J/g in DSC. Atactic polymers are defined as having no consistent patterns among chiral sequences [Mark H., Bikales N., Encyclopedia of Polymer Science and Engineering. Volume 9, John Wiley & Sons Inc, 1987, page 800] as can be determined by 13C NMR [Karger-Kocsis J., Polypropylene, Structure blends and composites, 1. Structure and Morphology, Chapman & Hall, 1995, pages 15-19]. This amorphous polypropylene fraction is generally of low molecular weight (wax) with a broad molecular weight distribution, and as such either used in for example adhesives applications or discarded as landfill. Although these polymers have been referred to as 'amorphous', they often are not completely atactic containing some isotactic or syndiotactic segments, often exhibiting some crystailinity.

EP-A-0401993 gives examples of these amorphous fractions extracted from products made using a Ziegler Natta catalyst. In this reference, 6-methyl-1,6-octadiene or, preferably, 7-methyl-1,6-octadiene is copolymerized with propylene in a two step process. In each example of the invention, polypropylene having 30.2 to 37 percent crystallinity is produced. An amorphous fraction could be extracted from the product in each of the Examples: 4.4.2.7. and 3.6 percent in Examples 1-4, respectively, having 3.9 mole percent 7-methyl-1,6-octadiene comonomer, molecular weight distribution (MWD) 4.5, and melt flow rate (MFR) of 3.1 g/10 min in Example 1: and 2.6 mole percent. MWD 4.8 MFR 3.5 g/10 min: 2.4 mole percent. MWD 5.5. MFR 2.8; 2.0 mole percent, MWD 5.9. MFR 3.1 g/10 min with 2.2 mole percent ethylene for Examples 2-4 respectively. In the comparative examples, where a one step process was used in Comparative Examples 1 and 3, and 1,5-octadiene was used in Comparative Examples 2 and 3, the amorphous fraction was generally larger: 7.6, 43.8 and 62.2 percent in Comparative Examples 1-3, respectively. In column 6, lines 3-7 and from column 15, line 48 through column 18, line 7, the authors discuss the fact that the dienes used result in side chains having unsaturation which facilitates subsequent crosslinking. Thus, from a diene molecule, one double bond is involved in polymerization, but the other remains a double bond useful for subsequent crosslinking. Where the monomer is only linked to the polymer through the carbon of one double bond and the other double bond remains, it does not have desirable H-type branching.

The production of high molecular weight atactic polypropylene with a narrow molecular weight distribution is taught in the art to be attainable by using metallocene catalysts. Patent documents EP 604917 and EP 604908 teach the synthesis of amorphous polypropylene polymers which are claimed to have interesting elastomeric properties. The characteristics of the polymers are intrinsic viscosity > 1 dl/g, percent(r) percent(m)>0 wherein percent(r) is the percent of syndiotactic diads and percent (m) is the percent of isotactic diads, less than 2 percent of the CH₂ groups contained in sequences (CH₂)ₙ with n≥2 and Bernoullianity index B=1 ± 0.2, and a narrow molecular weight distribution. (EP 729968) Patent documents WO 96/23838. US Patent 5539056 and US Patent 5516848 teach the production of a blend of an amorphous poly-α-olefin of Mw>150,000 and a crystalline poly-∝-olefin with Mw<300.000. These blends are claimed to exhibit unusual elastomeric properties, namely an improved balance of mechanical strength and rubber recovery properties.

While pure propylene homopolymer or copolymer with 0 percent crystallinity as measured by DSC and with high melt elasticity is expected to have excellent attributes for many valued applications (that is in adhesives, films, tackifier compositions), the current art does not teach molecular composition exhibiting such attributes. It is known that pure or blended high molecular weight amorphous polypropylene with a narrow molecular weight distribution provides better elastomeric properties as indicated above (for example rubber recovery). However, the melt elasticity of linear high molecular weight atactic polypropylene is limited by the processability of the polymer. As the elastomeric properties increase with increasing molecular weight of the amorphous polypropylene, the viscosity at processing temperatures increases as well (as measured by the melt index) rendering the processing of such resins more difficult, and therefore limiting the final practical melt elasticity that can be attained.

The present invention advantageously solves the problem of maintaining processability (as indicated by melt flow rate, MFR) while increasing melt elasticity of amorphous polypropylene, including its copolymers or their blend compositions. From the prior art, high molecular weight amorphous polypropylene with a narrow molecular weight distribution is known (EP 604917, EP 729968) as is its use in blends to increase elastomeric properties (WO 96/23838, US 5539056, US 5516848). However, in the present invention a higher level of melt elasticity is attained at better processability properties. The present invention alternatively advantageously solves problems of insufficient transparency of blends previously used to increase the melt elasticity of for example isotactic polypropylene by blending with high molecular weight polyethylene. Blends of the invention preferably exhibit improved transparency over the prior art blends used for increasing melt elasticity.

In the practice of the invention, processability is maintained while, melt elasticity of amorphous polypropylene, including copolymers and interpolymers of propylene is increased by introducing a polymerizable polyene as a comonomer in the polypropylene.

The invention includes a process having at least one step (a) of contacting an olefin comprising propylene, and at least one polymerizable non-conjugated polyene in the presence of at least one amorphous polypropylene forming transition metal catalyst containing from 1 to 3 π-bonded anionic or neutral ligand groups under polymerization conditions to form a resulting amorphous polymer containing at least 90 mole percent molecular units derived from propylene, hereinafter propylene units, and molecular units derived from the non-conjugated polyene, hereinafter polyene units. The process optionally has additional steps before, after or simultaneous with step (a).

The invention also includes any polymer prepared by any process of the invention. The polymer includes any polymer comprising propylene units and molecular units of at least one polymerizable non-conjugated polyene which are amorphous as indicated by the substantial absence of a melting peak and a heat of fusion of 0 J/g in DSC-analysis. The polymer preferably comprises at least 90 mole percent propylene units and at least 0.00005 preferably at least 0.007 mole percent polyene units.

In addition, the invention includes a composition of matter comprising any polymer of the invention. The composition of matter preferably comprises a polymer having propylene units and molecular units of at least one polymerizable non-conjugated polyene which polymer is amorphous as indicated by the absence of a melting peak and a heat of fusion of 0 J/g in DSC-analysis. Especially important are compositions of the invention which are blends of any amorphous polymer of the invention, hereinafter first polymer, with at least one synthetic or natural polymer having a composition different from the first polymer.

The invention further includes any article obtained by subjecting any polymer or composition of the invention to melt processing; any article of manufacture comprising an object blow molded from at least one amorphous polymer or composition of any the amorphous polymers of the invention; any article of manufacture comprising an object thermoformed from at least one polymer or composition of the invention; any article of manufacture comprising an object extruded from at least one polymer or composition of any polymer of the invention; any article of manufacture comprising an object cast from at least one polymer or composition of any the polymers of the invention; and any film comprising at least one polymer or composition of the invention.

The invention also includes any multistage process for the polymerization of at least one polymerizable monomer comprising:
(A) a first stage of polymerization in which at least one of the monomers is polymerized, in one or more reactors, in the presence of a catalyst comprising the product of reaction between an alkyl-Al compound and a solid component comprising a compound of a transition metal M^{I} selected from Ti and V, not containing M-π bonds, a halide of Mg in active form, to produce an olefin homo or copolymer;
(B) optionally a treatment stage in which the product obtained in the first stage of polymerization (A) is, in any order whatever:
   (a) brought into contact with a compound capable of deactivating the catalyst present in the stage (A) and,
   (b) brought into contact with an atactic polypropylene forming catalyst and optionally with an alkyl-Al compound or boron compound;
(C) a second stage of polymerization in which at least one of the polymerizable monomers is polymerized, in at least one reactor, in the presence of the product obtained in treatment stage (B).

Additionally the invention includes a process for preparing a propylene polymer composition comprises: conducting multistage polymerization including the following steps (a), (b) and (c) in the presence of:
(A) an atactic polypropylene forming catalyst.
   in which the steps (a), (b) and optionally but preferably (c) are carried out in any order, and each of the second and subsequent stage polymerization is carried out in the presence of a polymer or polymers obtained by the preceding stage or stages respectively, to produce a propylene polymer composition preferably comprising from 20 to 90 percent by weight of propylene (co)polymer (a) obtained in the step (a), and more preferably from 5 to 75 percent by weight of a propylene/olefin copolymer (b) obtained in the step (b), and most preferably from 5 to 75 percent by weight of an ethylene/olefin copolymer (c) obtained in step (c), said composition preferably also has a melt flow rate, as measured at 230°C under a load of 2.16 kg, of 0.01 to 500 g/10 min;
   step (a):
      (I) homopolymerizing propylene or (ii) copolymerizing propylene and at least one olefin selected from ethylene and olefins of 4 to 20 carbon atoms to prepare a propylene (co)polymer (a) comprising not less than 80 mole percent of constituent units derived from propylene, said propylene (co)polymer (a) preferably having a melting point, as measured by a differential scanning calorimeter, of not lower than 100°C and preferably a melt flow rate, as measured at 230°C under a load of 2.16 kg, of 0.01 to 1,000 g/10 min;
   step (b):
      copolymerizing propylene, a polyene having at least 2 polymerizable bonds and at least bout 7 carbon atoms, and optionally at least one olefin selected from ethylene and α-olefins of 4 to 20 carbon atoms to prepare a propylene/olefin copolymer (b) comprising more than 50 mole percent of constituent units derived from propylene, said propylene/olefin (b) being amorphous
   and step (c):
      copolymerizing ethylene and at least one olefin selected from olefins of 3 to 20 carbon atoms to prepare an ethylene/olefin copolymer (c) comprising more than 50 mole percent of constituent units derived from ethylene, said ethylene/olefin copolymer (c) preferably having an intrinsic viscosity [η], as measured in decalin at 135°C of 0.1 to 20 dl/g.

Polymers and compositions of the invention exhibit increased melt elasticity of amorphous polypropylene, including its copolymers or as pure or copolymer component of a blend with other polyolefins, specifically isotactic polypropylene, while maintaining its processability; by introducing a non-conjugated polyene as comonomer.

This invention includes the practical production process for the manufacturing of an amorphous propylene polymer by solution polymerization with metallocene or constrained geometry based catalysts. It was found that using a non-conjugated polyene which has two double bonds polymerizable (hereinafter polymerizable bonds) with an olefin, preferably propylene, in the presence of a transition metal catalyst suitable for forming atactic polymer chains (hereinafter an atactic polypropylene forming transition metal catalyst), particularly a metallocene or constrained geometry catalyst, preferably a non-conjugated polyene having sufficient chain length to avoid unnecessary intrachain ring formation and achieve predominantly H-type-branching, more preferably having at least 7 carbon atoms, which polyene is most preferably linear but optionally has branches of from 1 to 10 carbon atoms, such as 1,8-nonadiene, 1,9-decadiene, divinylbenzene, divinylsilane, or more preferably 1,9-decadiene, will increase the ratio of the shear viscosity measured at low shear rate ( 1 Hz) divided by the shear viscosity measured at high shear rate (100 Hz) over that of the pure homopolymer or copolymer formed in the same process, or as a component of a corresponding blend with other polyolefins. In this way the melt strength (important at low shear rates) is improved while good processability (lower shear viscosity at high shear rate) is maintained. This improves the output rate in for example film production processes for packaging applications while also improving the performance (mechanical. strength) of the film. Other potential applications processes include blow molding, thermoforming, injection molding and general extrusion processes.

The synthesis of the described amorphous polymers of the invention comprises an interpolymerization of a) at least one mono-olefin selected from the group consisting of propylene optionally with at least one other α-olefin, cyclic olefin or a combination thereof and b) a non-conjugated polyene preferably having at least 7 carbon atoms and having two readily polymerizable double bonds; in the presence of an atactic transition metal catalyst preferably comprising a transition metal compound containing at least one π-bonded anionic ligand group. Feed to a polymerization reactor wherein the polymerization occurs comprises the non-conjugated polyene and olefin in a mole ratio from 0.00005, preferably 0.005, more probably 0.007 to 0.3, preferably 0.1 mole of the polyene per mole of olefin (including propylene).

The mono-olefins comprise propylene, or a combination of propylene and other mono-α-olefins having from 2 to 20 carbon atoms or cyclic olefins having preferably from 3 to 20 carbon atoms. Examples of the α-olefins include ethylene, 1-butene, 3-methyl-1-butene, 1-pentene, 3-methyl-1-pentene, 4-methyl-1-pentene, 1-hexene, 1-heptene, 4,4-dimethyl-1-pentene, 3-ethyl-1-pentene, 1-octene, 1-nonene, 1-decene, 1-dodecene, 1-tetradecene, 1-hexadecene, 1-octadecene and 1-eicosene. Examples of the cyclic olefins include cyclopentene, cyclohexene, norbornene, 1-methylnorbornene, 5,6-dimethylnorbornene, 5,5,6-trimethylnorbornene, 5-propylnorbornene, 5-phenylnorbornene and 5-benzylnorbornene.

Preferably, the α-olefin comprises propylene and optionally another α-olefin containing from 2 to 18 carbon atoms. More preferably, the α-olefin comprises propylene and another α-olefin containing from 2 to 12 carbon atoms. Especially preferred are other α-olefins containing from 2 to 8 carbon atoms, such as ethylene, 1-butene, 1-pentene, 1-hexene, 4-methyl-1-pentene, and 1-octene.

The content of comonomer is preferably in the range of 0.05 to 10 mole percent, more preferably'in the range of 0.05 to 5 mole percent, and most preferably ethylene in the range of 0.05 to 5 mole percent based on total polymer composition. The polymer advantageously comprises at least 90 mole percent propylene units especially for use in films where high propylene content results in resin strength.

The term readily polymerizable bond as used in the present invention in connection with the term polyene means a carbon-carbon double bond which is polymerizable with propylene under reaction conditions. The double bond is preferably a terminal carbon-carbon double bond or a carbon-carbon double bond in a strained ring structure. The polyene used in the present invention is a non-conjugated polyene. It preferably has two such readily polymerizable bonds. Preferably, the readily polymerizable bonds are of the same or equal reactivity under the polymerization conditions specified herein later. Such polymers are referred to herein as polymerizable polyenes. The non-conjugated polyenes are linear, branched, or cyclic; the branches preferably have to 10 carbon atoms, silicon atoms or a combination thereof.

The polymers are unsubstituted (hydrocarbon) or inertly substituted, that is substituted with groups which do not undesirably interfere with polymerization, particularly which do not poison the catalyst. Such inert groups include silicon-based groups such as silyl and silane groups. Preferred non-conjugated polyenes of at least 7 carbon atoms having two readily polymerizable double bonds include straight-chain or branched acyclic diene compounds. Preferably, the/polyenes have up to 35 carbon atoms, more preferably up to 20, most preferably up to 15 carbon atoms. Of these carbon atoms at least 4, more preferably at least 6, most preferably at least 7 are in a chain between the polymerizable bonds.

Examples of the straight-chain or branched acyclic diene compounds include 1,6-heptadiene, 1,7-octadiene, 1,8-nonadiene, 1,9-decadiene, 1,11-dodecadiene, 1,13-tetradecadiene, and lower alkyl substituted derivatives thereof; examples of the monocyclic alicyclic diene compounds include 1,3-divinylcyclopentane, 1,2-divinylcyclohexane, 1,3-divinylcyclohexane, 1,4-divinylcyclohexane, 1,5-divinylcyciooctane, 1-allyl-4-vinylcyclohexane, 1,4-diallylcyclohexane, 1-allyl-5-vinylcyclooctane, 1,5-diallylcyclooctane, and lower alkyl substituted derivatives thereof. Other suitable polyenes include bicylco-(2,2,1)-hepta-2,5-diene (norbornadiene), the dimer of norbornadiene, and diolefins having two strained ring double bonds, such as the reaction product obtained by reacting 2,5-norbornadiene with cyclopentadienyl-1,4,4a,5,8,8a-hexahydro-1,4,5,8-dimethano-naphtalene, and combinations thereof. Compounds similar but resulting from the addition of more bridged ring units by further condensation with such ring compounds as cyclopentadiene can also be used.
The non-conjugated-polyenes are used singly or in combination in the polymerization with the monoolefin.

Preferably the polyene is a diene, advantageously an aliphatic diene, preferably having an olefinic double bond at both terminals, in other words an α-ω-diene, containing from 8 to 18 carbon atoms. More preferably, the polyene is an aliphatic α-ω-diene containing from 10 to 18 carbon atoms. Interpolymers containing units derived from 1,9-decadiene are highly preferred. Highly preferred are interpolymers comprising units derived from propylene, optionally and more preferably with another α-olefin with from 2 to 12 carbon atoms, preferably from 2 to 8 carbon atoms, and from 1,9-decadiene.

The polyene content is used to adjust the product properties such as melt tension and processability. It has been found that the incorporation of surprisingly low amounts of polyenes in the present interpolymers is capable of improving greatly the desired properties. Advantageous polyene contents in the interpolymer range from 0.005, preferably 0.007 mole percent, more preferably 0.01 to preferably 0.10, more preferably 0.70, even more preferably, 0.05 most preferably 0.2 mole percent. If the polyene content becomes too high, Dart impact strength and tear strength will deteriorate, and crosslinking or gel formation may occur. For the highly preferred interpolymers containing 1,9-decadiene units, the preferred polyene content is from 0.02 to 0.1, more preferably 0.01 0.05 mole percent. The polyene content can be determined by solution ¹³C NMR for those interpolymers not containing other monomers that may interfere with the determination. Such other interfering monomers are monomers that give pendant side chains of more than 5 carbon atoms, such as 1-octene, which gives a hexyl side chain having 6 carbon atoms. For interpolymers of propylene and polyene and for interpolymers of propylene, optionally an α-olefin of 3 to 7 carbon atoms, and a polyene, this technique can be used to determine the polyene content. Alternatively and for other interpolymers, the polyene content of the interpolymer can be determined by measuring the amounts or concentration of monomers (mono-olefin or mono-olefins and polyene) introduced to the reactor and the amounts or concentrations of the same leaving the reactor. From these data, the composition of the interpolymer can be easily calculated by difference and thus the polyene content determined. The amounts or concentrations of the monomers can be determined by any suitable technique, such as, for example, Fourier Transform Infrared Spectroscopy, Fourier Transform Near Infrared Spectroscopy, or Gas Chromatography.

Alpha, omega aliphatic dienes of lower carbon numbers have been found to have a tendency to be incorporated into the interpolymer as intramolecular rings, for example both ends of the diene are reacted into the same polymer backbone. For the improvements in melt tension and processing properties, such intramolecular rings do not contribute significantly, and are therefore not desirable. Intramolecular rings, for example those comprising 6 to 8 ring carbon atoms as may be formed by copolymerizing 1,7-octadiene and propylene can be detected by ¹³C NMR spectroscopy, provided that other comonomers are not present in such high quantities that their signals interfere with or obscure the signals of the respective rings. In preferred interpolymers of the present invention, not more than 15 percent of the polyene is incorporated in the interpolymer as an intramolecular ring, and preferably not more than 5 percent.

It has been found that, under the polymerization conditions described later herein, with increasing polyene carbon number interpolymers are formed containing less intramolecular rings and having remarkably improved properties. Significant proportions of such dienes having higher carbon numbers (for example above 8 carbons) are not incorporated in ring form but are reacted into different growing polymer backbones. This type of linkage is referred herein to as "H"-type branching. In case of, for example 1,7-octadiene or 1,9-decadiene, the linking groups between the two polymer chains are 1,4-butanediyl and 1,6-hexanediyl, respectively. In interpolymers of propylene, optionally a mono-olefin comonomer having not more than 7 carbon atoms and polyenes, the existence of such "H"-type branching can be detected by solution ¹³C NMR spectroscopy.

The interpolymers advantageously have a melt flow rate (MFR) in the range from 0.001 g/10 min, preferably 0.05 more preferably 0.2 g/10 min. to advantageously 50, preferably 15, more preferably 5 g/10 min. Especially in a solution polymerization process, interpolymers having melt flow rates of less than 0.05 g/10 min may give highly viscous solutions which can limit the rate of production of such polymer and are therefore less desirable. At too high melt flow rates, the improvements, especially in melt tension, are less pronounced, yet still significantly higher than for polymers having the same melt flow rate yet containing no polyene. The processability measurement is done in accordance with ASTM-D-1238-95, measuring the melt flow rate at 230°C/2 16 kg, standard conditions for polypropylene.

Melt strength is indicated by the melt tension at which a molten strand breaks. The melt tension is measured by a pulley transducer in conjunction with a melt indexer Melt tension is the load that the extrudate or filament exerts while passing over the pulley at the speed of 50 rpm. The melt indexer is operated at 230°C and the polymer is extruded under a weight of 2160 g through a vertical die with a diameter of 2.1 mm and a length/diameter ratio of 3.82. The molten strand crosses an air gap of 45 cm until it is stretched by a take-up roll gyrating at 50 rpm. The tensile force, or melt tension, required for this stretching is measured by a force cell and expressed in grams. The melt tension measurement is similar to the "Melt Tension Tester" manufactured by Toyoseiki and is described by John Deally in Rheometers for Molten Plastics, published by Van Nostrand Reinhold Co. (1982) on pp. 250-251.

The interpolymers of the present invention advantageously have a molecular weight distribution, M_{w}/Mₙ, as determined by gel permeation chromatography from 1.8 to 5. The term molecular weight distribution as used herein, also referred to as "polydispersity", is the weight average molecular weight, M_{w}, divided by the number average molecular weight, Mₙ, and is determined by gel permeation chromatography analysis (GPC).

The present interpolymers are advantageously different from prior art linear olefin-based polymers and copolymers of the same composition but without the polyene in that, at the same melt flow rate, the number average molecular weight of the present interpolymer is lower than that of the corresponding linear olefin-based polymers and interpolymers.

The present interpolymers have melt tension properties which are preferably at least 30 percent higher, and more preferably at least 50 percent higher than the melt tension of a similar polymer of substantially the same melt flow rate yet containing no polyene.

The term amorphous refers to the absence of crystallinity in the polymer; for polypropylene homopolymer this means that the polymer is atactic, without any isotactic segments giving rise to crystallinity, as can be determined by the absence of a melting point and a heat of fusion of 0 J/g in DSC. Atactic polymers are defined as having in sufficient consistent patterns among chiral sequences to result in crystallinity [Mark H., Bikales N., Encyclopedia of Polymer Science and Engineering, Volume 9, John Wiley & Sons Inc, 1987, page 800] as can be determined by 13C NMR [Karger-Kocsis J., Polypropylene, Structure blends and composites, 1. Structure and Morphology, Chapman & Hall, 1995, pages15-19].

The present interpolymers are advantageously completely amorphous as indicated by the absence of a melting peak and a heat effusion of 0 J/g in 0°C Dynamic Scanning Calorimetry (DSC) analysis. The glass transition temperature is advantageously in the range of -10°C to advantageously 5°C, preferably 0°Cf, more preferably -5°C, as determined using a 10°C/min rate of heating.

The interpolymer of the present invention is optionally blended with other components such as natural or synthetic polymers, both thermoplastic and thermosetting. Exemplary polymers are olefinic polymers, styrenic polymers and styrenic block copolymers, polyesters, polyethers and natural and synthetic rubbers. Preferably the interpolymer of the present invention is blended with olefinic polymers of composition different from the polymer of the invention, more preferably with isotactic polypropylene. The preferred content of the amorphous interpolymer of the present invention is advantageously in the range of 0.05 volume percent to preferably 30, more preferably 15, most preferably 10 volume percent. Isotactic polypropylene blended with at least one polymer of the invention has an MFR of preferably 0.001, more preferably 0.001 to preferably 50, more preferably 20, most preferably 5 g/10 min.

Specifically advantageous embodiments are those corresponding to the compositions taught in such references as WO 96/23838, US 5,539,056 and US 5,516,848 except that the amorphous propylene polymers taught therein are replaced by polymers of the invention having corresponding composition ratios but with polyene as taught herein.

Blending is conveniently carried out by any means within the skill in the art such as a compounding operation, such as, for example, by single- and twin-screw extruders, Banbury mixers, Brabender mixers, Farrel continuous mixers, and two-roll mixers. The order of mixing and the form of the blend components to be mixed is not critical. Conveniently a polymer of the invention is prepared in a separate reactor from an isotactic propylene polymer and in parallel therewith, then the two polymers are blended. The mixing temperature is preferably such that an intimate blend is obtained of the components. Determining temperatures and other conditions is within the skill in the art. Typical temperatures are above the softening or melting points of at least one of the components, and more preferably above the softening or melting points of all the components.

The interpolymer of the present invention optionally further comprises additives or adjuvants which are advantageously added to olefin-based polymers, such as fillers, anti-oxidants, colorants, UV stabilizers, flame retardants, etc. which are within the skill in the art.

The interpolymers of the present invention or their blend compositions are optionally used to fabricate articles, such as films, sheet, moldings, and other shaped articles by conventional processes, preferably under melt processing conditions. Suitable processes include injection molding, compression molding, blow molding, extruding, rotational molding, and thermoforming. The present interpolymers can also be functionalized or grafted using to methods and techniques within the skill in the art.

The present invention solves the problem of maintaining processability (as indicated by melt flow rate, MFR) while increasing melt elasticity of amorphous polypropylene, including its copolymers or their blend compositions better than is obtained in previously disclosed compositions containing amorphous propylene polymers such as those taught in (EP 604917, EP 729968). It is alternatively or also in blends to increase elastomeric properties (WO 96/23838, US 5539056, US 5516848). In the present invention a higher level of melt elasticity is attained with better processability properties. The present invention alternatively solves problems of insufficient transparency of blends previously used to increase the melt elasticity of isotactic polypropylene by blending with high molecular weight polyethylene. Blends of the invention preferably exhibit improved transparency over the prior art blends used for increasing melt elasticity. Transparency is characterized by a haze measurement as described in ASTM D-1003 on molded plaques or on granules.

Polymers of the invention are produced in polymerization processes, the catalysts and conditions of which are within the skill in the art.

Practice of the invention uses any transition metal catalyst capable of producing an atactic or amorphous propylene polymer within the skill in the art.

All references herein to elements or metals belonging to a certain Group refer to the Periodic Table of the Elements published and copyrighted by CRC Press, Inc., 1989. Also any reference to the Group or Groups shall be to the Group or Groups as reflected in this Periodic Table of the Elements using the IUPAC system for numbering groups.

Advantageous catalysts for use herein are preferably derivatives of any transition metal including Lanthanides, but preferably of Group 3, 4, or Lanthanide metals which are in the +2, +3, or +4 formal oxidation state. Such compounds include metal complexes containing from 1 to 3 π-bonded anionic or neutral ligand groups, which are optionally cyclic or non-cyclic delocalized π-bonded anionic ligand groups. Exemplary of such it-bonded anionic ligand groups are conjugated or nonconjugated, cyclic or non-cyclic dienyl groups, and allyl groups. By the term "π-bonded" is meant that the ligand group is bonded to the transition metal by means of its delocalized π-electrons.

Each atom in the delocalized π-bonded group is optionally independently substituted with a radical selected from the group consisting of hydrogen, halogen, hydrocarbyl, halohydrocarbyl, hydrocarbyl-substituted metalloid radicals wherein the metalloid is selected from Group 14 of the Periodic Table of the Elements, and such hydrocarbyl- or hydrocarbyl-substituted metalloid radicals further substituted with a Group 15 or 16 hetero atom containing moiety. Included within the term "hydrocarbyl" are C₁₋₂₀ straight, branched and cyclic alkyl radicals, C₆₋₂₀ aromatic radicals, C₇₋₂₀ alkyl-substituted aromatic radicals, and C₇₋₂₀ aryl-substituted alkyl radicals. In addition two or more such adjacent radicals may together form a fused ring system, a hydrogenated fused ring system, or a metallocycle with the metal. Suitable hydrocarbyl-substituted organometalloid radicals include mono-, di- and tri-substituted organometalloid radicals of Group 14 elements wherein each of the hydrocarbyl groups contains from 1 to 20 carbon atoms. Examples of advantageous hydrocarbyl-substituted organometalloid radicals include trimethylsilyl, triethylsilyl, ethyldimethylsilyl, methyldiethylsilyl, triphenylgermyl, and trimethylgermyl groups. Examples of Group 15 or 16 hetero atom containing moieties include amine, phosphine, ether or thioether moieties or monovalent derivatives thereof, e. g. amide, phosphide, ether or thioether groups bonded to the transition metal or Lanthanide metal, and bonded to the hydrocarbyl group or to the hydrocarbyl- substituted metalloid containing group.

Examples of advantageous anionic, delocalized π-bonded groups include cyclopentadienyl, indenyl, fluorenyl, tetrahydroindenyl, tetrahydrofluorenyl, octahydrofluorenyl, pentadienyl, cyclohexadienyl, dihydroanthracenyl, hexahydroanthracenyl, and decahydroanthracenyl groups, as well as C₁₋₁₀ hydrocarbyl-substituted or C₁₋₁₀ hydrocarbyl-substituted silyl substituted derivatives thereof. Preferred anionic delocalized π-bonded groups are cyclopentadienyl, pentamethylcyclopentadienyl, tetramethylcyclopentadienyl, tetramethylsilylcyclopentadienyl, indenyl, 2,3-dimethylindenyl, fluorenyl, 2-methylindenyl, 2-methyl-4-phenylindenyl, tetrahydrofluorenyl, octahydrofluorenyl, and tetrahydroindenyl.

A preferred class of catalysts are transition metal complexes corresponding to the Formula A:

LₗMXₘX'ₙX"ₚ,

or a dimer thereof
wherein:
L is an anionic, delocalized, π-bonded group that is bound to M, containing up to 50 non-hydrogen atoms, optionally two L groups may be joined together forming a bridged structure, and further optionally one L is bound to X;
M is a metal of Group 4 of the Periodic Table of the Elements in the +2, +3 or +4 formal oxidation state;
X is an optional, divalent substituent of up to 50 non-hydrogen atoms that together with L forms a metallocycle with M;
X' at each occurrence is an optional neutral Lewis base having up to 20 non-hydrogen atoms and optionally one X' and one L may be joined together;
X" each occurrence is a monovalent, anionic moiety having up to 40 non-hydrogen atoms, optionally, two X" groups are covalently bound together forming a divalent dianionic moiety having both valences bound to M, or, optionally 2 X" groups are covalently bound together to form a neutral, conjugated or nonconjugated diene that is π-bonded to M (whereupon M is in the +2 oxidation state), or further optionally one or more X" and one or more X' groups are bonded together thereby forming a moiety that is both covalently bound to M and coordinated thereto by means of Lewis base functionality;
*l* is 0, 1 or 2;
m is 0 or 1;
n is a number from 0 to 3;
p is an integer from 0 to 3; and
the sum, / + m + p, is equal to the formal oxidation state of M, except when 2 X" groups together form a neutral conjugated or non-conjugated diene that is π-bonded to M, in which case the sum / +m is equal to the formal oxidation state or M.
Preferred complexes include those containing either one or two L groups. The latter complexes include those containing a bridging group linking the two L groups. Preferred bridging groups are those corresponding to the formula (ER*₂)ₓ wherein E is silicon, germanium, tin, or carbon, R* independently each occurrence is hydrogen or a group selected from silyl, hydrocarbyl, hydrocarbyloxy and combinations thereof, said R* having up to 30 carbon or silicon atoms, and x is 1 to 8. Preferably, R* independently each occurrence is methyl, ethyl, propyl, benzyl, tert-butyl, phenyl, methoxy, ethoxy or phenoxy.

Examples of the complexes containing two L groups are compounds corresponding to the formula: 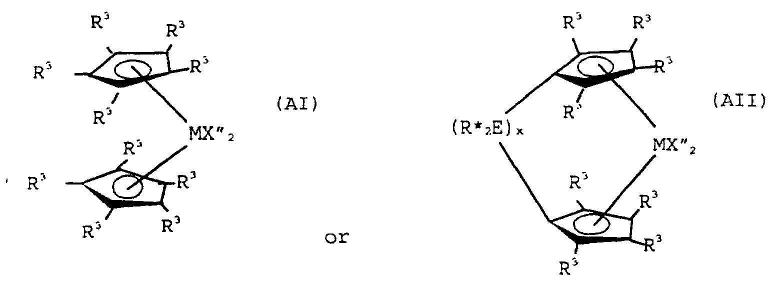 wherein:
M is titanium, zirconium or hafnium, preferably zirconium or hafnium, in the +2 or +4 formal oxidation state;
R³ in each occurrence independently is selected from the group consisting of hydrogen, hydrocarbyl, silyl, germyl, cyano, halo and combinations thereof, said R³ having up to 20 non-hydrogen atoms, or adjacent R³ groups together form a divalent derivative (for example, a hydrocarbadiyl, germadiyl group) thereby forming a fused ring system, and X" independently each occurrence is an anionic ligand group of up to 40 non-hydrogen atoms, or two X" groups together form a divalent anionic ligand group of up to 40 non-hydrogen atoms or together are a conjugated diene having from 4 to 30 non-hydrogen atoms forming a-complex with M, whereupon M is in the +2 formal oxidation state, and R*, E and x are as previously defined.
The foregoing metal complexes are especially suited for the preparation of polymers having stereoregular molecular structure. In such capacity it is preferred that the complex possesses Cₛ symmetry or possesses a chiral, stereorigid structure. Examples of the first type are compounds possessing different delocalized π-bonded systems, such as one cyclopentadienyl group and one fluorenyl group. Similar systems based on Ti(IV) or Zr(IV) were disclosed for preparation of syndiotactic olefin polymers in Ewen, et al., J. Am. Chem. Soc. 110, 6255-6256 (1980). Examples of chiral structures include rac bis-indenyl complexes. Similar systems based on Ti(IV) or Zr(IV) were disclosed for preparation of isotactic olefin polymers in Wild et al., J. Organomet. Chem., 232, 233-47, (1982).

In the present invention it is preferred that the metal complex polymerizes the mentioned olefins regioselectively, but without stereoselectivity, thus producing an atactic (co)polymer. In such capacity it is preferred that the complex is obtained from metallocenes possessing C₂ᵥ molecular symmetry and from achiral, meso isomers of ansa metallocenes; the catalyst complex is regiospecific and astereospecific (not stereospecific).

Exemplary bridged ligands containing two π-bonded groups are: (dimethylsilyl-bis(cyclopentadienyl)), (dimethylsilyl-bis(methylcyclopentadienyl)), (dimethylsilyl-bis(ethylcyclopentadienyl)), (dimethylsilyl-bis(t-butylcyclopentadienyl)), (dimethylsilyl-bis(tetramethylcyclopentadienyl)), (dimethylsilyl-bis(indenyl)), (dimethylsilyl-bis(tetrahydroindenyl)), (dimethylsilyl-bis(fluorenyl)), (dimethylsilyl-bis(tetrahydrofluorenyl)), (dimethylsilyl-bis(2-methyl-4-phenylindenyl)), (dimethylsilyl-bis(2-methylindenyl)), (dimethylsilyl-cyclopentadienyl-fluorenyl), (dimethylsilyl-cyclopentadienyl-octahydrofluorenyl), (dimethylsilyl-cyclopentadienyltetrahydrofluorenyl), (1, 1, 2, 2-tetramethyl-1, 2-disilyl-bis-cyclopentadienyl), (1, 2-bis(cyclopentadienyl)ethane, and (isopropylidene-cyclopentadienyl-fluorenyl).

Preferred X" groups are selected from hydride, hydrocarbyl, silyl, germyl, halohydrocarbyl, halosilyl, silylhydrocarbyl and aminohydrocarbyl groups, or two X" groups together form a divalent derivative of a conjugated diene or else together they form a neutral, π-bonded, conjugated diene. Most preferred X" groups are C₁₋₂₀ hydrocarbyl groups, including those optionally formed from two X" groups together.

A further class of metal complexes utilized in the present invention corresponds to the preceding formula LₗMXₘX'ₙX"ₚ, or a dimer thereof, wherein X is a divalent substituent of up to 50 non-hydrogen atoms that together with L forms a metallocycle with M.

Preferred divalent X substituents include groups containing up to 30 non-hydrogen atoms comprising at least one atom that is oxygen, sulfur, boron or a member of Group 14 of the Periodic Table of the Elements directly attached to the delocalized π-bonded group, and a different atom, selected from the group consisting of nitrogen, phosphorus, oxygen or sulfur that is covalently bonded to M.

A preferred class of such Group 4 metal coordination complexes used according to the present invention corresponds to the formula: 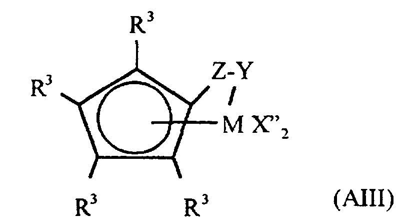 wherein:
M is titanium, zirconium or hafnium in the +2, +3 or +4 formal oxidation state;
X" and R³ are as previously defined for formulas AI and All;
Y is -O-, -S-, -NR*-, -NR*₂-, or -PR*-; and
Z is SiR*₂, CR*₂, SiR*₂SiR*₂, CR*₂CR*₂, CR*=CR*, CR*₂SiR*₂, or GeR*₂, wherein R* is as previously defined.

Illustrative Group 4 metal complexes that may be employed in the practice of the present invention include:
cyclopentadienyltitaniumtrimethyl, cyclopentadienyltitaniumtriethyl, cyclopentadienyltitaniumtriisopropyl, cyclopentadienyltitaniumtriphenyl, cyclopentadienyltitaniumtribenzyl, cyclopentadienyltitanium-2,4-dimethylpentadienyl, cyclopentadienyltitanium-2,4-dimethylpentadienyltriethylphosphine, cyclopentadienyltitanium-2,4-dimethylpentadienyltrimethylphosphine, cyclopentadienyltitaniumdimethylmethoxide, cyclopentadienyltitaniumdimethylchloride, pentamethylcyclopentadienyltitaniumtrimethyl, indenyltitaniumtrimethyl, indenyltitaniumtriethyl, indenyltitaniumtripropyl, indenyltitaniumtriphenyl, tetrahydroindenyltitaniumtribenzyl, pentamethylcyclopentadienyltitaniumtriisopropyl, pentamethylcyclopentadienyltitaniumtribenzyl, pentamethylcyclopentadienyltitaniumdimethylmethoxide, pentamethylcyclopentadienyltitaniumdimethylchloride, bis(η5-2,4-dimethylpentadienyl)titanium, bis(η5-2,4-dimethylpentadienyl)titaniumtrimethylphosphine, bis(η5-2,4-dimethylpentadienyl)titaniumtriethylphosphine, octahydrofluorenyltitaniumtrimethyl, tetrahydroindenyltitaniumtrimethyl, tetrahydrofluorenyltitaniumtrimethyl, (tert-butylamido)(1,1-dimethyl-2,3,4,9,10--1,4,η5,6,7,8-hexahydronaphthalenyl)dimethylsilanetitaniumdimethyl, (tert-butylamido)(1,1,2,3-tetramethyl-2,3,4,9,10--1,4,5,6,7,8-hexahydronaphthalenyl)dimethylsilanetitaniumdimethyl, (tert-butylamido)(tetramethyl-η5-cyclopentadienyl) dimethylsilanetitanium dibenzyl, (tert-butylamido)(tetramethyl-η5-cyclopentadienyl)dimethylsilanetitanium dimethyl, (tert-butylamido)(tetramethyl-η5-cyclopentadienyl)-1,2-ethanediyltitanium dimethyl, (tert-butylamido)(tetramethyl-η5-indenyl)dimethylsilanetitanium dimethyl, (tert-butylamido)(tetramethyl-η5-cyclopentadienyl)dimethylsilane titanium (III) 2-(dimethylamino)benzyl;
(tert-butylamido)(tetramethyl-η5-cyclopentadienyl)dimethylsilanetitanium (III) allyl, (tert-butylamido)(tetramethyl-η5-cyclopentadienyl)dimethylsilanetitanium (III) 2,4-dimethylpentadienyl, (tert-butylamido)(tetramethyl-η5-cyclopentadienyl)dimethylsilanetitanium (II) 1,4-diphenyl-1,3-butadiene, (tert-butylamido)(tetramethyl-η5-cyclopentadienyl)dimethyl-silanetitanium (II) 1,3-pentadiene, (tert-butylamido)(2-methylindenyl)dimethylsilanetitanium (II) 1,4-diphenyl-1,3-butadiene, (tert-butylamido)(2-methylindenyl)dimethylsilanetitanium (II) 2,4-hexadiene, (tert-butylamido)(2-methylindenyl)dimethylsilanetitanium (IV) 2,3-dimethyl-1,3-butadiene, (tert-butylamido)(2-methylindenyl)dimethylsilanetitanium (IV)isoprene, (tert-butylamido)(2-methylindenyl)dimethylsilanetitanium 1,3-butadiene, (tert-butylamido)(2,3-dimethylindenyl)dimethylsilanetitanium (IV) 2,3-dimethyl-1,3-butadiene, (tert-butylamido)(2,3-dimethylindenyl)dimethylsilanetitanium (IV) isoprene; (tert-butylamido)(2,3-dimethylindenyl)dimethylsilanetitanium (IV) dimethyl; (tert-butylamido)(2,3-dimethylindenyl)dimethylsilanetitanium (IV) dibenzyl; (tert-butylamido)(2,3-dimethylindenyl)dimethylsilanetitanium 1,3-butadiene,(tert-butylamido)(2,3-dimethylindenyl)dimethylsilanetitanium (II) 1,3-pentadiene, (tert-butylamido)(2,3-dimethylindenyl)dimethylsilanetitanium (II) 1,4-Biphenyl-1,3-butadiene, (tert-butylamido)(2-methylindenyl)dimethylsilanetitanium (II) 1,3-pentadiene,(tert-butylamido)(2-methylindenyl)dimethylsilanetitanium (IV) dimethyl, (tert-butylamido)(2-methylindenyl)dimethylsilanetitanium (IV) dibenzyl, (tert-butylamido)(2-methyl-4-phenylindenyl)dimethylsilanetitanium (II) 1,4-diphenyl-1,3-butadiene, (tert-butylamido)(2-methyl-4-phenylindenyl)dimethylsilanetitanium (II) 1,3-pentadiene, (tert-butylamido)(2-methyl-4-phenylindenyl)dimethylsilanetitanium (II) 2,4-hexadiene, (tert-butylamido)(tetramethyl-η5-cyclopentadienyl)dimethyl-silanetitanium 1,3-butadiene, (tert-butylamido)(tetramethyl-η5-cyclopentadienyl)dimethyl-silanetitanium (IV) 2,3-dimethyl-1,3-butadiene, (tert-butylamido)(tetramethyl-η5-cyclopentadienyl)dimethyl-silanetitanium (IV) isoprene, (tert-butylamido)(tetramethyl-η5-cyclopentadienyl)dimethyl-silanetitanium (II) 1,4-dibenzyl-1,3-butadiene, (tert-butylamido)(tetramethyl-η5-cyclopentadienyl)dimethyl-silanetitanium (II) 2,4-hexadiene, (tert-butylamido)(tetramethyl-η5-cyclopentadienyl)dimethyl-silanetitanium (II) 3-methyl-1,3-pentadiene, (tert-butylamido)(2,4-dimethylpentadien-3-yl)dimethylsilanetitaniumdimethyl, (tert-butylamido)(6,6-dimethylcyclohexadienyl)dimethylsilanetitaniumdimethyl, (tert-butylamido)(1,1-dimethyl-2,3,4,9,10--1,4,5,6,7,8-hexahydronaphthalen-4-yl)dimethylsilanetitaniumdimethyl, (tert-butylamido)(1,1,2,3-tetramethyl-2,3,4,9,10--1,4,5,6, 7, 8-hexahydronaphthalen-4-yl)dimethylsilanetitaniumdimethyl(tert-butylamido)(tetramethyl-η5-cyclopentadienyl methylphenyl-silanetitanium (IV) dimethyl, (tert-butylamido)(tetramethyl-η5-cyclopentadienyl methylphenyl-silanetitanium (II) 1,4-diphenyl-1,3-butadiene, 1-(tert-butylamido)-2-(tetramethyl-η5-cyclopentadienyl)ethanediyl-titanium (IV) dimethyl, and 1-(tert-butylamido)-2-(tetramethyl-η5-cyclopentadienyl)ethanediyl-titanium (II) 1,4-diphenyl-1,3-butadiene

Complexes containing two L groups including bridged complexes suitable for use in the present invention include:
bis(cyclopentadienyl)zirconiumdimethyl, bis(cyclopentadienyl)zirconium dibenzyl, bis(cyclopentadienyl)zirconium methyl benzyl, bis(cyclopentadienyl)zirconium methyl phenyl, bis(cyclopentadienyl)zirconiumdiphenyl, bis(cyclopentadienyl)titanium-allyl, bis(cyclopentadienyl)zirconiummethylmethoxide, bis(cyclopentadienyl)zirconiummethylchloride, bis(pentamethylcyclopentadienyl)zirconiumdimethyl, bis(pentamethylcyclopentadienyl)titaniumdimethyl, bis(indenyl)zirconiumdimethyl, bis(indenyl)zirconiummethyl(2-(dimethylamino)benzyl), bis(indenyl)zirconium methyltrimethylsilyl, bis(tetrahydroindenyl)zirconium methyltrimethylsilyl, bis(pentamethylcyclopentadienyl)zirconiummethylbenzyl, bis(pentamethylcyclopentadienyl)zirconiumdibenzyl, bis(pentamethylcyclopentadienyl)zirconiummethylmethoxide, bis(pentamethylcyclopentadienyl)zirconiummethylchloride, bis(methylethylcyclopentadienyl)zirconiumdimethyl, bis(butylcyclopentadienyl)zirconium dibenzyl, bis(t-butylcyclopentadienyl)zirconiumdimethyl, bis(ethyltetramethylcyclopentadienyl)zirconiumdimethyl, bis(methylpropylcyclopentadienyl)zirconium dibenzyl, bis(trimethylsilylcyclopentadienyl)zirconium dibenzyl, dimethylsilyl-bis(cyclopentadienyl)zirconiumdimethyl, dimethylsilyl-bis(tetramethylcyclopentadienyl)titanium-(III) allyl dimethylsilyl-bis(t-butylcyclopentadienyl)zirconiumdichloride, dimethylsilyl-bis(n-butylcyclopentadienyl)zirconiumdichloride, (methylene-bis(tetramethylcyclopentadienyl)titanium(III) 2-(dimethylamino)benzyl, (methylene-bis(n-butylcyclopentadienyl)titanium(III) 2-(dimethylamino)benzyl, dimethylsilyl-bis(indenyl)zirconiumbenzylchloride, dimethylsilyl-bis(2-methylindenyl)zirconiumdimethyl, dimethylsilyl-bis(2-methyl-4-phenylindenyl)zirconiumdimethyl, dimethylsilyl-bis(2-methylindenyl)zirconium-1,4-diphenyl-1,3-butadiene, dimethylsilyl-bis(2-methyl-4-phenylindenyl)zirconium (II) 1,4-diphenyl-1,3-butadiene, dimethylsilyl-bis(tetrahydroindenyl)zirconium(II) 1,4-diphenyl-1,3-butadiene, dimethylsilyl-bis(fluorenyl)zirconiummethylchloride, dimethylsilyl-bis(tetrahydrofluorenyl)zirconium bis(trimethylsilyl), and dimethylsilyl(tetramethylcyclopentadienyl)(fluorenyl)zirconium dimethyl.

Other catalysts, especially catalysts containing other Group 4 metals, will, of course, be apparent to those skilled in the art.

Preferred metallocene species for use in the practice of the present invention include constrained geometry metal complexes, including titanium complexes, and methods for their preparation as are disclosed in U.S. Application Serial No. 545,403, filed July 3, 1990 (EP-A-416,815); U.S. Application Serial No. 967,365, filed October 28, 1992 (EP-A-514,828); and U.S. Application Serial No. 876,268, filed May 1, 1992, (EP-A-520,732), as well as US-A- 5,055,438, US-A- 5,057,475, US-A- 5,096,867, US-A- 5,064,802, US-A-5,096,867, US-A-5,132,380, US-A-5,132,380, US-A-5,470,993, US-A-5,486,632 and US-A-5,132,380, US-A-5,321,106.

Metallocene catalysts are advantageously rendered catalytically active by combination with one or more activating cocatalysts, by use of an activating technique, or a combination thereof. In the practice of the present invention, advantageous cocatalysts are those boron-containing cocatalysts within the skill in the art. Among the boron-containing cocatalysts are tri(hydrocarbyl)boron compounds and halogenated derivatives thereof, advantageously having from 1 to 10 carbons in each hydrocarbyl or halogenated hydrocarbyl group, more especially perfluorinated tri(aryl)boron compounds, and most especially tris(pentafluorophenyl)borane); amine, phosphine, aliphatic alcohol and mercaptan adducts of halogenated tri(C₁₋₁₀hydrocarbyl)boron compounds, especially such adducts of perfluorinated tri(aryl)boron compounds. Alternatively, the cocatalyst includes borates such as tetrapheny Borate having as counterions ammonium ions such as are within the skill in the art as illustrated by European Patent EP 672,688 (Canich, Exxon), published September 20, 1995.

In a particular preferred embodiment of the invention, the cocatalyst can be used in combination with a tri(hydrocarbyl)aluminum compound having from 1 to 10 carbons in each hydrocarbyl group or an oligomeric or polymeric alumoxane. It is possible to employ these aluminum compounds for their beneficial ability to scavenge impurities such as oxygen, water, and aldehydes from the polymerization mixture. Preferred aluminum compounds include trialkyl aluminum compounds having from 2 to 6 carbons in each alkyl group, especially those wherein the alkyl groups are ethyl, propyl, isopropyl, n-butyl, isobutyl, pentyl, neopentyl, or isopentyl, and methylalumoxane, modified by methylalumoxane (that is methylalumoxane modified by reaction with triisobutyl aluminum) (MMAO) and diisobutylalumoxane. The molar ratio of aluminum compound to metal complex is preferably from 1:10,000 to 1000:1, more preferably from 1:5000 to 100:1, most preferably from 1:100 to 100:1.

In the practice of the invention, cocatalysts are used in amounts and under conditions within the skill in the art. Their use is applicable to all processes within the skill in the art, including solution, slurry, bulk (especially propylene), and gas phase polymerization processed. Such processes include those fully disclosed in the references cited previously.

The molar ratio of catalyst/cocatalyst or activator employed preferably ranges from 1:10,000 to 100:1, more preferably from 1:5000 to 10:1, most preferably from 1:1000 to 1:1.

When utilizing such strong Lewis acid cocatalysts to polymerize higher α-olefins, especially propylene, it has been found especially desirable to also contact the catalyst/cocatalyst mixture with a small quantity of ethylene or hydrogen (preferably at least one mole of ethylene or hydrogen per mole of metal complex, suitably from 1 to 100,000 moles of ethylene or hydrogen per mole of metal complex). This contacting may occur before, after or simultaneously to contacting with the higher -olefin. If the foregoing Lewis acid activated catalyst compositions are not treated in the foregoing manner, either extremely long induction periods are encountered or no polymerization at all results. The ethylene or hydrogen may be used in a suitably small quantity such that no significant affect on polymer properties is observed. For example, polypropylene having physical properties equal to or superior to polypropylene prepared by use of other metallocene catalyst systems is prepared according to the present invention.

In most instances, the polymerization advantageously takes place at conditions known in the prior art for Ziegler-Natta or Kaminsky-Sinn type polymerization reactions, that is, temperatures from 0-250°C and pressures from atmospheric to 3000 atmospheres. Suspension, solution, slurry, gas phase or high pressure, whether employed in batch or continuous form or under other process conditions, including the recycling of condensed monomers or solvent, may be employed if desired. Examples of such processes are well known in the art for example, WO 88/02009-A1 or U.S. Patent No. 5,084,534, disclose conditions that are advantageously employed with the polymerization catalysts and are incorporated herein by reference in their entireties. A support, especially silica, alumina, or a polymer (especially polytetrafluoroethylene or a polyolefin) is optionally employed, and desirably is employed when the catalysts are used in a gas phase polymerization process. Such supported catalysts are advantageously not affected by the presence of liquid aliphatic or aromatic hydrocarbons such as are optionally present under the use of condensation techniques in a gas phase polymerization process. Methods for the preparation of supported catalysts are disclosed in numerous references, examples of which are U.S. Patent Nos. 4,808,561, 4,912,075, 5,008,228, 4,914,253, and 5,086,025 and are suitable for the preparation of supported catalysts.

In such a process the reactants and catalysts are optionally added to the solvent sequentially, in any order, or alternatively one or more of the reactants or catalyst system components are premixed with solvent or material preferably miscible therewith then mixed together or into more solvent optionally containing the other reactants or catalysts. The preferred process parameters are dependent on the monomers used and the polymer desired.

Propylene is added to the reaction vessel in predetermined amounts to achieve predetermined per ratios, advantageously in gaseous form using a joint mass flow controller. Alternatively propylene or other liquid monomers are added to the reaction vessel in amounts predetermined to result in ratios desired in the final product. They are optionally added together with the solvent (if any), alpha-olefin and functional comonomer, or alternatively added separately. The pressure in the reactor is a function of the temperature of the reaction mixture and the relative amounts of propylene, other monomers used in the reaction or a combination thereof. Advantageously, the polymerization process is carried out at a pressure of from 10 to 1000 psi (70 to 7000 kPa), most preferably from 140 to 550 psi (980 to 3790 kPa). The polymerization is then conducted at a temperature of from 25 to 200°C, preferably from 50 to 100°C, and most preferably from 60 to 80°C.

The process is advantageously continuous, in which case the reactants are added continuously or at intervals and the catalyst and, optionally cocatalyst, are added as needed to maintain reaction or make up loss.

The preferred processes for the present invention or solution polymerization or bulk polymerization. In the latter case liquid polypropylene is the reaction medium. Preferred solvents include mineral oils and the various hydrocarbons which are liquid at reaction temperatures. Illustrative examples of useful solvents include straight- and branched-chain hydrocarbons such as alkanes, for example isobutane, butane, pentane, isopentene, hexane, heptane, octane and nonane, as well as mixtures of alkanes including kerosene and Isopar E, available from Exxon Chemicals Inc.; cyclic and alicyclic hydrocarbons such as cyclopentane, cyclohexane, methylcyclohexane, methylcycloheptane, and mixtures thereof; and aromatics and alkyl-substituted aromatic compounds such as benzene, toluene, xylenes, ethylbenzene, diethylbenzene, ; and perfluorinated hydrocarbons such as perfluorinated C4-C10 alkanes. Suitable solvents may include liquid olefins which may act as monomers or comonomers. Mixtures of the foregoing are also suitable.

At all times, the individual ingredients as well as the recovered catalyst components are protected from oxygen and moisture. Therefore, the catalyst components and catalysts are prepared and recovered in an oxygen- and moisture-free atmosphere. Preferably, therefore, the reactions are performed in the presence of a dry, inert gas such as, for example, nitrogen.

Without limiting in any way the scope of the invention, one means for carrying out such a polymerization process is as follows. In a stirred-tank reactor, olefin monomer is introduced continuously together with solvent and polyene monomer. The reactor contains a liquid phase composed substantially of monomers together with any solvent or additional diluent. Catalyst and cocatalyst are continuously introduced in the reactor liquid phase. The reactor temperature and pressure may be controlled by adjusting the solvent/monomer ratio, the catalyst addition rate, as well as by cooling or heating coils, jackets or both. The polymerization rate is controlled by the rate of catalyst addition. The polymer product molecular weight is controlled, optionally, by controlling other polymerization variables such as the temperature, monomer concentration, or by a stream of hydrogen introduced to the reactor, as is well known in the art. The reactor effluent is contacted with a catalyst kill agent such as water or an alcohol. The polymer solution is optionally heated, and the polymer product is recovered by flashing off gaseous monomers as well as residual solvent or diluent at reduced pressure, and, if necessary, conducting further devolatilization in equipment such as a devolatilizing extruder. In a continuous process, the mean residence time of the catalyst and polymer in the reactor generally is from 5 minutes to 8 hours, and preferably from 10 minutes to 6 hours.

Preferably, the polymerization is conducted in a continuous solution polymerization system, optionally comprising more than one reactor connected in series or parallel.

The process of the invention is also useful in combination with or in sequence with other polymerizations, particularly addition polymerizations, within the skill in the art for producing amorphous, syndiotactic or isotactic polymers, particularly to produce blends (preferably in-reactor blends)of polymers of the invention with other polymers. Such use is within the skill in the art, for instance as illustrated by Canich in WO96/23838, Govoni et al in WO 96/02583, JP 8100016, EP 0436328 (Mitsui), EP 642536, Collina et al. in WO 96/11218, Welborne et al in EP 260130 and WO 87/02991 and Ueda et al. in EP 704462 and EP 704463, Buchelli et al. in WO 93/24533, Baker et al. in EP 704464, Sacchetti in WO 95/26369 Galli et al. in The Future Role of Ziegler-Natta Catalysts, Flexipole 96 conference paper, Houston, Texas, June 26-28, 1996 and U.S. Patents 5541260 (Ciarrocchi et al), 5532325 (Chiba Hiromasa, et al.), 5543478 (Hideto et al.), 4701432 (Welborn), and 5548042 (Goode).

The processes of the invention include multistage processes, which means that the process is carried out in two or more stages, in each of which polymerization occurs and which stages differ from one another in at least one parameter, preferably selected from reaction conditions (including phase), catalyst, reactants and equipment. A multistage reactor configuration can be set up using the same reactor for each stage; a part of a reactor for each stage; or one reactor per stage. In this specification, each stage is optionally referred to as a "reaction zone." Advantageously, two or three stages or reaction zones are used in the process. The stages or reaction zones are preferably connected in series. The cited references show that multistage processes are well within the skill in the art in the production of polyolefins. While the stages are preferably carried out in two or more (hereinafter multiple) reactors, they optionally occur in one reactor wherein one or more reaction conditions, reactants or catalysts are changed or used in sequence. For instance, a first catalyst is used until inactive, for example by being consumed, separated from reactants by polymer, or inactivated by addition of another material. Then a second catalyst is used. Alternatively, after a first catalyst is active in a polymerization, both the first and at least one subsequent catalyst are active simultaneously; for instance, at least one subsequent catalyst is added to a reaction mixture containing the first catalyst. It is within the skill in the art to stop and restart a polymerization by substantially stopping the reaction with or without the use of a deactivator, lower temperature, or deactivating a cocatalyst; preferably retaining the polymer particles in the reaction vessel without discharging them; and resuming the reaction for example by feeding an organoaluminum compound as cocatalyst to restart the polymerization, raising temperature to a temperature sufficient for polymerization, or addition of additional catalyst or monomer.

Multistage processes are particularly useful because of the possibility of independently varying, in any reactor or stage, process parameters to provide greater flexibility in controlling the composition and properties of the resulting polymer as compared with that obtained from a single-stage process. Multistage processes are useful for instance in the preparation of olefin (co)polymers with broad molecular weight distribution (MWD) by producing polymer fractions of different molecular weights in the various stages. Multiple stage processes are particularly useful in preparation of high-impact (co)polymers and reactor blends by sequential polymerizations to produce a first polymer composition having therein at least one other polymer composition. Preferably the first polymer composition comprises propylene repeating units (for example a homopolypropylene or a copolymer of propylene with ethylene or a combination thereof at least one other polymerizable monomer, preferably a alpha olefin) and the other polymer compositions are propylene copolymers with ethylene or a combination thereof at least one other alpha olefin, advantageously in a proportion greater than that of the ethylene or other polymerizable monomer in the first polymer composition. The present invention is applicable in any stage, but is particularly useful after a first polymerization stage.

"Reactor blend", as that term is used herein, means a highly dispersed blend of two or more components produced as a result of the formation of one polymer in the presence of another, an in situ blend produced by polymerizing one or more monomers in the presence of another polymer. The resulting reactor product is a highly dispersed blend of the various polymers.

The present invention includes a modified polypropylene which, in its overall concept, comprises a reactor blend of a first propylene polymer with at least one second polymer, which is preferably more elastomeric, lower molecular weight, less isotactic or containing more ethylene structural units than the first propylene polymer, The first propylene polymer preferably comprises at least 50 percent propylene units, more preferably at least 75 percent propylene units. The second polymer is preferably a polymer of the invention. Preferred melt flow rate (MFR) ratios, indicative of molecular weight ratios, for the first propylene polymer to the second polymer vary widely, from 1:100 to 1:100, preferably 1:10 to 10:1, most preferably 1:11 to 1.1:1. Preferred composition weight ratios of first polymer to second polymer in the reactor blend also vary widely, preferably from 20:1 to 1:20. The present invention is particularly applicable to multistage processes because polymers of desirable characteristics which are advantageously combined with polymers of different composition are obtained in the practice of the invention.

One or more stages wherein the present invention is practiced or obtains are advantageously preceded, followed or simultaneous with one or more stages where the invention is not practiced. Alternatively, there is a multistage process having at least two stages in which the present invention is practiced. In one preferred embodiment, a polymer is formed not utilizing the present invention then the present invention is practiced. For instance a first stage advantageously uses a process within the skill in the art, for example using at least one first metallocene or, preferably Ziegler-Natta catalyst or other transition metal catalyst not π-bonded to a hydrocarbon component, preferably free of ligand consisting of hydrocarbon residues, followed by a process of the invention. The first transition metal catalyst is preferably present with at least one second catalyst, an atactic polypropylene forming catalyst used in the practice of the present invention, in the second stage although the first catalyst is preferably less active than the atactic polypropylene forming catalyst, more preferably substantially inactive. The first catalyst is preferably a product of reaction between an alkyl-Al compound and a solid component comprising a compound of a transition metal M^{I} selected from Ti and V, not containing M^{I} -π bonds, and preferably a halide of Mg in active form, more preferably MgCl₂, most preferably as a support or a component of a support. A preferred embodiment is:
A multistage process for the polymerization of at least one polymerizable monomer comprising:
   (A) a first stage of polymerization in which at least one of the monomers is polymerized, in one or more reactors, in the presence of a catalyst comprising the product of reaction between an alkyl-Al compound and a solid component comprising a compound of a transition metal M^{I} selected from Ti and V, not containing M-π bonds, a halide of Mg in active form, to produce an olefin homo or copolymer;
   (B) optionally a treatment stage in which the product obtained in the first stage of polymerization (A) is, in any order whatever:
      (a) brought into contact with a compound capable of deactivating the catalyst present in the stage (A) and,
      (b) brought into contact with an atactic polypropylene forming catalyst and optionally with an alkyl-Al compound or boron compound;
   (C) a second stage of polymerization in which at least one of the polymerizable monomers is polymerized, in at least one reactor, in the presence of the product obtained in treatment stage (B).

For subsequent inclusion of another polymer composition, the polymer composition resulting from step (A) preferably has sufficient porosity to admit another polymer composition; preferably it has a porosity, expressed as a percentage of voids, of greater than 5, more preferably greater than 10, most preferably greater than 15 percent. Preferably the particles are macroporous, that is more than 40 percent of their pores have a diameter greater than 1000 angstroms. When the porosity is greater than 15 percent, then preferably more than 90 percent of the pores have diameters greater than 1000 angstroms. These porosities enable the catalyst to be active, and facilitate working in gas phase, which is advantageous especially for a second step. A gas phase process step is advantageously a fluidized bed process within the skill in the art such as that taught by Masahiro et al in U.S. Patent 5,543,478.

The support used in step (A) is advantageously substantially spherical and more preferably has a mean diameter of at least 10 micrometers and more preferably less than 150 micrometers. Preparation and use of such supports and catalysts are within the skill in the art, for instance as taught in U.S. Patents 4,298,718 and 4,495,338 and European Patents EP-A-395083, EP-A-553805, and EP-A-553806. Alternatively, the catalyst(s) are optionally supported by other means within the skill in the art such as by the procedures taught for instance in WO 92/13009 or WO 93/19105 or U.S. Patents 5,231,151; 4,980,330 and 5,487,938.

When there is a combination of supported metallocene and other transition metal component, desirably, the molar ratio of metallocene to transition metal component on the support will be from 100 to 1 to 1 to 100, and preferably from 10 to 1 to 1 to 10. The specific metallocenes selected and their molar ratios are dependent upon the molecular composition desired for the component polymers and the overall composition desired for the blend.

Multistage processes also suitably have two or more steps taking place in the presence of at least one catalyst which is an atactic polypropylene forming catalyst. A specific embodiment of the invention which illustrates a three step process is:
A process for preparing a propylene polymer composition comprises: conducting multistage polymerization including the following steps (a), (b) and (c) in the presence of:
   (A) an atactic polypropylene forming catalyst.
      in which the steps (a), (b) and optionally but preferably (c) are carried out in any order, and each of the second and subsequent stage polymerization is carried out in the presence of a polymer or polymers obtained by the preceding stage or stages respectively, to produce a propylene polymer composition preferably comprising from 20 to 90 percent by weight of propylene (co)polymer (a) obtained in the step (a), and more preferably from 5 to 75 percent by weight of a propylene/olefin copolymer (b) obtained in the step (b), and most preferably from 5 to 75 percent by weight of an ethylene/olefin copolymer (c) obtained in step (c), said composition preferably also has a melt flow rate, as measured at 230°C under a load of 2.16 kg, of 0.01 to 500 g/10 min;
      step (a):
         (I) homopolymerizing propylene or (ii) copolymerizing propylene and at least one olefin selected from ethylene and olefins of 4 to 20 carbon atoms to prepare a propylene (co)polymer (a) comprising not less than 80 mole percent of constituent units derived from propylene, said propylene (co)polymer (a) preferably having a melting point, as measured by a differential scanning calorimeter, of not lower than 100°C and preferably a melt flow rate, as measured at 230°C under a load of 2.16 kg, of 0.01 to 1,000 g/10 min;
      step (b):
         copolymerizing propylene, a polyene having at least 2 polymerizable bonds and at least 7 carbon atoms, and optionally at least one olefin selected from ethylene and α-olefins of 4 to 20 carbon atoms to prepare a propylene/olefin copolymer (b) comprising more than 50 mole percent of constituent units derived from propylene, said propylene/olefin (b) being amorphous and
      step (c):
         copolymerizing ethylene and at least one olefin selected from olefins of 3 to 20 carbon atoms to prepare an ethylene/olefin copolymer (c) comprising more than 50 mole percent of constituent units derived from ethylene, said ethylene/olefin copolymer (c) preferably having an intrinsic viscosity [η], as measured in decalin at 135°C of 0.1 to 20 dl/g.

Alternative to a reactor blend, a multistage process can lead to a shell, core polymer wherein a first polymer is formed in a first stage and is substantially surrounded with at least one polymer of a composition different from the first. For, instance, an illustrative resulting resin particle has an inner core of at least 10, preferably at least 30, more preferably at least 50, most preferably at least 90 weight percent of a sticky polymer, and an outer shell of at least 50, preferably at least 60, more preferably at least 70, most preferably at least 80 weight percent non-sticky polymer. A process of the invention is preferably used to produce the sticky polymer.

All stages and supported components and catalysts optionally include cocatalysts as previously described. The cocatalyst preferably comprises an aluminum alkyl, an alumoxane, or a boron compound.

The following examples are used to illustrate this invention and not limit it. Ratios, parts, and percentages are by weight unless otherwise stated. Examples (Ex) of the invention are designated numerically while comparative samples (C.S.) are designated alphabetically and are not examples of the invention.

### Examples of the Invention:

### Example 1 and Comparative Sample A: (Procedure)

The polymers described in Example 1 and Comparative Sample A were produced in the following way:
Propylene which had been purified by passing through silica, alumina molecular sieves or a combination thereof in the amount designated in each instance was added to 600 g of a diluent mixture of C8-C10 saturated hydrocarbons, commercially available from Exxon Chemical Company under the trade designation Isopar E™ solvent under a nitrogen atmosphere at a slight overpressure of nitrogen to keep a nitrogen blanket on the diluent and reactants in a 2 liter batch reactor having a line connected to the respective cylinders containing the respective gases for addition of gaseous materials, a line from a vessel with solvent for addition of liquids, and a water jacket for temperature control. The propylene was added using a line and a valve. Then any comonomer (also previously purified by passing through silica, alumina molecular sieves or a combination thereof) was added using an injection needle, after the addition of which, hydrogen was introduced in an amount sufficient to raise the pressure 5 psi (34 kPa) above atmospheric for a total of 135 kPa reaction pressure using line from a hydrogen cylinder. Then catalyst system was added using an injection needle. The mixture was at room temperature until the catalyst was added; then it rose because of the exothermic polymerization and was controlled by water jacket to 50 °C for the designated reaction time after which the temperature was lowered to room temperature. Stirring was accomplished by a mechanical stirrer in the reactor and was begun when the solvent had been added to the reactor. The reaction was stopped by flashing propylene from the reactor (expanding volume by opening a flash line), and then the reactor was opened. The resulting polymer solution was recovered from the outlet at the bottom of the reactor and the polymer separated from the solution by drying it in a hood at room temperature.

The catalyst system used was {(tert-butylamido)dimethyl(tetramethyl-η⁵-cyclopentadienyl)silane} titanium (II) 1,3-pentadiene, the titanium being in the formal +2 oxidation state, with tris(pentafluorophenyl) borane as cocatalyst at a molar ratio of catalyst to cocatalyst of 1:1.5. All materials other than the catalyst were commercially available. The Group IV metal complex catalyst was prepared as disclosed by Devore et al. in U. S. Patents 5,470,993 and 5,556,928; and U.S. Patent 5,512,693 by Rosen et al. The catalyst system was diluted to a concentration of 0.02 M (mole/L) in toluene for addition to the reaction mixture. As an impurity scavenger, 100 microliter of a 0.05 M solution of TIBA (tri-isobutylaluminum) in was used.

The following additives were employed in the examples and comparative examples: 50 to 2000 ppm (200 ppm for Example 1, and 200 ppm for Comparative Sample A) of a mixture of 1 part of a phenolic-type anti-oxidant and 4 parts of a phosphite-type anti-oxidant, both commercially available from Ciba Geigy Corp. under the trade designations Irganox 1010 and Irgafos 168, respectively.

### Comparative Sample A: Atactic homopolymer of propylene:

A 170 g sample of propylene was used. After injection of the catalyst system in an amount containing 0.75 micromoles of Ti, the temperature was maintained at 50°C for 80 minutes. During this time two more injections of catalyst system corresponding to 0.75 micromoles of Ti were done at regular intervals.

105 g of polymer resulted after separation of the solvent.

### Example 1: Copolymer of propylene and a polyene:

A 170 g sample of propylene was added. Then, 0.05 mole percent based on propylene of a 1,9-decadiene (as polyene) was added using an injection needle. After the hydrogen was introduced, a sample of catalyst system corresponding to 1.5 micromoles of Ti was injected, and the temperature was maintained at 50°C for 30 minutes. During this time one more injection of catalyst system corresponding to 1.0 micromoles of Ti was done after 15 minutes reaction time.

30 g of polymer resulted after separation of the solvent.

The product properties are listed in Table 1. In the table the following abbreviations are used: DD for 1,9-decadiene; and Pr for propylene. The amount of diene was that shown to be incorporated in solution ¹³ C NMR. The comparative sample is indicated with "C.S. A.".

**Table 1:**

| Product properties of example and comparative sample | | | | | | | |
|---|---|---|---|---|---|---|---|
| | MFR [g/10min] | Diene DD [mole percent] | MT [g] | Shear visc. Ratio [1:100 rad/s. 230 °C] | Mw [g/mole] | Mn [g/mole] | MWD |
| Ex. 1 | 2.0 | 0.013 | 4.69 | 4.33 | 212000 | 99500 | 2.13 |
| C.S. A | 2.2 | 0 | 1.95 | 3.51 | 217000 | 96300 | 2.25 |

MFR was melt flow rate as determined by ASTM-D-1238-95 at 230°C/2.16 kg.
Shear rate versus viscosity curve for the polymers was obtained employing a Rheometrics Mechanical Spectrometer (RMS-80) according to manufacturer's directions under dynamic sweep mode from 0.1 to 100 radian/second at a temperature of 230°C.
Melt tension (MT) was measured as described in the specification using a pulley transducer and melt indexer as described by J. Deally in Rheometers for Molten Plastics, Van Nostrand Reinhold (1982) pp. 250-257 at 230°C with a weight of 10 kg.

**Table 2:**

| ***Apparent shear viscosity as a function of frequency at 230°C*** | | |
|---|---|---|
| Frequency (rad/s) | Apparent Viscosity (P) | |
| | Example 1 | C.S. A |
| 0.10 | 42852 | 21538 |
| 0.16 | 41103 | 21368 |
| 0.25 | 38898 | 20939 |
| 0.40 | 36633 | 20416 |
| 0.63 | 33983 | 19705 |
| 1.00 | 31270 | 18856 |
| 1.59 | 28491 | 17854 |
| 2.51 | 25730 | 16735 |
| 3.98 | 23006 | 15504 |
| 6.31 | 20370 | 14176 |
| 10.00 | 17834 | 12775 |
| 15.85 | 15405 | 11315 |
| 25.12 | 13109 | 9841 |
| 39.81 | 10977 | 8369 |
| 63.10 | 9004 | 6932 |
| 100.00 | 7216 | 5379 |

The significant improvement in the melt tension and shear viscosity ratio in the interpolymers of the present invention is evident from a comparison of the increased apparent shear viscosity at low frequencies in Table 2 for Example 1 with that of Comparative Sample A. Although one might expect a slight increase in melt tension with increasing molecular weight (decreasing melt flow rate), the increase in melt tension from 1.95 to 4.69 grams going from a MFR of 6.6 g/10 min to a MFR of 4.6 g/10 min cannot be accounted for by the change in molecular weight alone, as is known in the literature such as explained by V.V. DeMaio and D. Dong in "The effect of chain structure on melt strength of propylene and polyethylene" from SPE/ANTEC Proceedings, April 27-May 1 1997, where isotactic polypropylene homopolymer was shown to increase in melt tension from 1.5 to 2.0 grams with an increase in MFR from 4.5 to 6.5 g/10 min. Atactic and isotactic polypropylene behave similarly in the molten phase.

## Claims

1. A process **characterized by** having at least one step of (a) contacting an olefin comprising propylene, and at least one polymerizable non-conjugated polyene in the presence of at least one amorphous polypropylene forming transition metal catalyst containing from 1 to 3-π-bonded anionic or neutral ligand groups under polymerization conditions to form a resulting amorphous polymer containing at least 90 mole percent molecular units derived from propylene, hereinafter propylene units, and molecular units derived from the non-conjugated polyene, hereinafter polyene units.

2. The process of Claim 1 wherein the resulting amorphous polymer comprises at least 90 mole percent propylene units and at least 0.007 mole percent polyene units, and wherein the non-conjugated polyene has sufficient chain length to form predominantly H-type branches with a minimal number of intrachain rings.

3. The process of Claim 1 wherein the process takes place in a polymerization reactor and is polymerization of (a) at least one mono-olefin selected from the group consisting of propylene and combinations of propylene with α-olefins or cyclic olefins and (b) a non-conjugated polyene which is linear, branched, or cyclic having at least 7 up to 35 carbon atoms and having two polymerizable double bonds independently selected from terminal carbon-carbon double bonds and carbon-carbon double bonds in a strained ring structure, in the presence of an atactic polypropylene forming transition metal catalyst.

4. The process of any of Claims 1-3 wherein the non-conjugated polyene is selected from 1,6 heptadiene 1,7-octadiene, 1,8-nonadiene, 1,9-decadiene, 1,11-dodecadiene, 1,13-tetradecadiene, 1,3-divinylcyclopentane, 1,2-divinylcyclohexane, 1,3-divinylcyclohexane, 1,4-divinylcyclohexane, 1,5-divinylcyclooctane, 1-allyl-4'-vinylcyclohexane, 1,4-diallylcyclohexane, 1-allyl-5-vinyl-cyclooctane, 1,5-diallylcyclooctane, lower alkyl substituted derivatives thereof, bicylco-(2,2,1)-hepta-2,5-diene (norbornadiene), the dimer of norbornadiene, the reaction product obtained by reacting 2,5-norbornadiene with cyclopentadienyl-1,4,4a,5,8,8a-hexahydro-1,4,5,8-dimethano-naphtalene. divinylbenzene, divinylsilane, and combinations thereof.

5. The process of any of Claims 1-4 wherein feed to the polymerization reactor comprises the non-conjugated polyene and mono-olefin in a mole ratio from 0.007 to 0.1 mole of non-conjugated polyene per mole of olefin.

6. The process of any of Claims 1-5 wherein the catalyst comprises a transition metal compound containing at least one π-bonded anionic ligand group, the transition metal comprises a Group 3, 4, or Lanthanide metal which is in the +2, +3, or +4 formal oxidation state, and the catalyst contains from I to 3 π-bonded anionic or neutral ligand groups, at least one of which is cyclic or non-cyclic delocalized π-bonded anionic ligand groups, selected from cyclopentadienyl, indenyl, fluorenyl, tetrahydroindenyl, tetrahydrofluorenyl, octahydrofluorenyl, pentadienyl, cyclohexadienyl, dihydroanthracenyl, hexahydroanthracenyl, and decahydroanthracenyl groups, and C₁₋₁₀ hydrocarbyl-substituted or C₁₋₁₀ hydrocarbyl-substituted silyl substituted derivatives thereof and combinations thereof.

7. The process of any of Claims 1-6 which includes another additional step (b) comprising contacting under addition polymerization conditions a polymerizable monomer with a catalyst different from the atactic polypropylene forming transition metal catalyst used in step (a) wherein step (b) precedes or follows step (a).

8. An amorphous polymer obtainable by the process of any of Claims 1-7.

9. An amorphous polymer of Claim 8 comprising propylene units and molecular units of at least one polymerizable non-conjugated polyene which is amorphous as indicated by the absence of a melting peak and a heat of fusion of 0 J/g in DSC-analysis, wherein the amorphous polymer comprises at least 90 mole percent propylene units and from at least 0.007 to 0.1 mole percent polyene units; the non-conjugated polyene has sufficient chain length to be predominantly incorporated as an H-type branch; and the non-conjugated polyene has at least 7 up to 35 carbon, atoms, wherein not more than 15 percent of the non-conjugated polyene is incorporated in the amorphous polymer in the form of an intramolecular ring; the amorphous polymer has a MRF in the range from 0.001 to 50 g/10 min; the amorphous polymer has a molecular weight distribution, M_{w}/Mₙ, as determined by gel permeation chromatography from 1.8 to 5.

10. The amorphous polymer of Claim 8 or 9 which as compared to an interpolymer of the same components without the non-conjugated polyene and the same melt flow rate, has a number average molecular weight lower than that of the interpolymer, a melt tension which is at least 30 percent higher than that of the interpolymer, has a higher melt strength and at least equivalent shear viscosity at high shear rate.

11. A composition of matter comprising an amorphous polymer of any of Claims 8-10, hereinafter first polymer and at least one synthetic or natural polymer of a composition different from the first polymer.

12. The composition of Claim 11 which has a larger ratio of shear viscosity measured at low shear rate (1 Hz) divided by the shear viscosity measured at high shear rate (100 Hz) over that of a composition having the same components except that a homopolypropylene or interpolymer of the same composition as the first polymer without the non-conjugated polyene replaces the homopolypropylene or interpolymer; a larger melt elasticity as measured by melt tension than that of a composition having the same components except that a homopolypropylene or interpolymer of the same composition as the first polymer without the non-conjugated polyene replaces the homopolypropylene or interpolymer, or a greater transparency as **characterized by** measuring the haze as described in ASTM D-1003 than that of a composition having the same components except that a homopolypropylene or interpolymer of the same composition as the first polymer without the non-conjugated polyene replaces the homopolypropylene or interpolymer.

13. An article of manufacture comprising an object blow molded, thermoformed, extruded, cast, or melt processed or formed as a film from at least one amorphous polymer of any of Claims 8-12.

## Patentansprüche

1. Verfahren, **gekennzeichnet durch** mindestens einen Schritt (a) Kontaktieren eines Olefins, umfassend Propylen, und mindestens eines polymerisierbaren, nicht konjugierten Polyens in der Gegenwart mindestens eines amorphes Polypropylen bildenden Übergangsmetall-Katalysators, der 1 bis 3 π-gebundene anionische oder neutrale Ligandengruppen enthält, unter Polymerisationsbedingungen, um ein resultierendes amorphes Polymer zu bilden, welches mindestens 90 Molprozent molekulare Einheiten, die von Propylen abgeleitet sind, im Folgenden Propylen-Einheiten, und molekulare Einheiten, die von dem nicht konjugierten Polyen abgeleitet sind, im Folgenden Polyen-Einheiten, enthält.

2. Verfahren nach Anspruch 1, worin das resultierende amorphe Polymer mindestens 90 Molprozent Propylen-Einheiten und mindestens 0,007 Molprozent Polyen-Einheiten umfasst, und worin das nicht konjugierte Polyen eine ausreichende Kettenlänge besitzt, um überwiegend Verzweigungen des H-Typs mit einer minimalen Anzahl von Ringen innerhalb einer Kette zu bilden.

3. Verfahren nach Anspruch 1, worin das Verfahren in einem Polymerisationsreaktor erfolgt und eine Polymerisation ist von (a) mindestens einem Mono-Olefin, ausgewählt aus der Gruppe bestehend aus Propylen und Kombinationen von Propylen mit α-Olefinen oder cyclischen Olefinen und (b) einem nicht konjugierten Polyen, das linear, verzweigt oder cyclisch ist, mit mindestens 7 bis 35 Kohlenstoffatomen und mit zwei polymerisierbaren Doppelbindungen, die unabhängig ausgewählt sind aus endständigen Kohlenstoff-Kohlenstoff-Doppelbindungen und Kohlenstoff-Kohlenstoff-Doppelbindungen in einer gespannten Ringstruktur, in Gegenwart eines Übergangsmetall-Katalysators, der ataktisches Polypropylen bildet.

4. Verfahren nach einem der Ansprüche 1-3, worin das nicht konjugierte Polyen ausgewählt ist aus 1,6-Hepatadien, 1,7-Octadien, 1,8-Nonadien, 1,9-Decadien, 1,11-Dodecadien, 1,13-Tetradecadien, 1,3-Divinylcyclopentan, 1,2-Divinylcyclohexan, 1,3-Divinylcyclohexan, 1,4-Divinylcyclohexan, 1,5-Divinylcyclooctan, 1-Allyl-4-vinylcyclohexan, 1,4-Diallylcyclohexan, 1-Allyl-5-vinylcyclooctan, 1,5-Diallylcyclooctan, mit niedrigeren Alkylen substituierte Derivate davon, Bicyclo-(2,2,1)-hepta-2,5-dien (Norbornadien), dem Dimer von Norbornadien, dem Reaktionsprodukt, erhalten durch Umsetzen von 2,5-Norbornadien mit Cyclopentadienyl-1,4,4a,5,8,8ahexahydro-1,4,5,8-dimethannaphthalen, Divinylbenzol, Divinylsilan und Kombinationen davon.

5. Verfahren nach einem der Ansprüche 1-4, worin das Einfüllen in den Polymerisationsreaktor das nicht konjugierte Polyen und Mono-Olefin in einem Molverhältnis von 0,007 bis 0,1 Mol des nicht konjugierten Polyens pro Mol Olefin umfasst.

6. Verfahren nach einem der Ansprüche 1-5, worin der Katalysator eine Übergangsmetallverbindung umfasst, die mindestens eine π-gebundene anionische Ligandengruppe enthält, wobei das Übergangsmetall eine Gruppe 3, 4 oder ein Lanthanoidmetall umfasst, das im formalen Oxidationszustand +2, +3 oder +4 ist, und worin der Katalysator 1 bis 3 π-gebundene anionische oder neutrale Ligandengruppen enthält, von denen mindestens eine eine cyclische oder nicht cyclische delokalisierte π-gebundene anionische Ligandengruppe ist, ausgewählt aus Cyclopentadienyl-, Indenyl-, Fluorenyl-, Tetrahydroindenyl-, Tetrahydrofluorenyl-, Octahydrofluorenyl-, Pentadienyl-, Cyclohexadienyl-, Dihydroanthracenyl-, Hexahydroanthracenyl- und Decahydroanthracenylgruppen, und mit C₁₋₁₀-Hydrocarbyl substituierten oder mit C₁₋₁₀-Hydrocarbyl substituierten, mit Silyl substituierten Derivaten davon und Kombinationen davon.

7. Verfahren nach einem der Ansprüche 1-6, das einen anderen zusätzlichen Schritt (b) einschließt, umfassend das Kontaktieren unter Additionspolymerisationsbedingungen eines polymerisierbaren Monomers mit einem Katalysator, der anders ist als der in Schritt (a) verwendete ataktisches Polypropylen bildende Übergangsmetall-Katalysator, worin Schritt (b) Schritt (a) vorausgeht oder folgt.

8. Amorphes Polymer, erhältlich durch das Verfahren nach einem der Ansprüche 1-7.

9. Amorphes Polymer nach Anspruch 8, umfassend Propyleneinheiten und molekulare Einheiten von mindestens einem polymerisierbaren, nicht konjugierten Polyen, das amorph ist, wie durch die Abwesenheit eines Schmelzpeaks und einer Schmelzwärme von O J/g in einer DSC-Analyse gezeigt, worin das amorphe Polymer mindestens 90 Molprozent Propyleneinheiten und mindestens 0,007 bis 0,1 Molprozent Polyeneinheiten umfasst; das nicht konjugierte Polyen eine ausreichende Kettenlänge besitzt, um überwiegend als eine Verzweigung des H-Typs inkorporiert zu sein; und das nicht konjugierte Polyen mindestens 7 bis 35 Kohlenstoffatome besitzt, worin nicht mehr als 15 Prozent des nicht konjugierten Polyens in das amorphe Polymer in Form eines intramolekularen Rings inkorporiert ist; das amorphe Polymer einen MRF im Bereich von 0,001 bis 50 g/10 min besitzt; das amorphe Polymer eine Molekulargewichtsverteilung M_{w}/Mₙ von 1,8 bis 5 besitzt, wie durch Permeations-Chromatographie bestimmt.

10. Amorphes Polymer nach Anspruch 8 oder 9, das im Vergleich mit einem Interpolymer der gleichen Komponenten ohne das nicht konjugierte Polymer und dem gleichen Schmelzfließverhältnis, ein ZahlenmittelMolekulargewicht besitzt, das geringer ist als das des Interpolymers, eine um mindestens um 30 Prozent größere Schmelzspannung ("melt tension") besitzt als die des Interpolymers, eine höhere Schmelzfestigkeit und bei einer höheren Scherrate mindestens eine äquivalente Scherviskosität besitzt.

11. Stoffzusammensetzung, umfassend ein amorphes Polymer nach einem der Ansprüche 8-10, im Folgenden erstes Polymer, und mindestens ein synthetisches oder natürliches Polymer einer Zusammensetzung, die sich von dem ersten Polymer unterscheidet.

12. Zusammensetzung nach Anspruch 11, die ein größeres Verhältnis der Scherviskosität, gemessen bei geringer Scherrate (1 Hz) dividiert durch die Scherviskosität besitzt, gemessen bei hoher Scherrate (100 Hz), gegenüber dem einer Zusammensetzung, die die gleichen Komponenten besitzt, außer dass ein Homopolypropylen oder Interpolymer der gleichen Zusammensetzung wie der des ersten Polymers ohne das nicht konjugierte Polyen das Homopolypropylen oder Interpolymer ersetzt; eine größere Schmelzelastizität besitzt, durch Schmelzspannung gemessen, als die einer Zusammensetzung, die die gleichen Komponenten besitzt, außer dass ein Homopolypropylen oder Interpolymer der gleichen Zusammensetzung wie der des ersten Polymers ohne das nicht konjugierte Polyen, das Homopolypropylen oder Interpolymer ersetzt; oder eine größere Transparenz besitzt, wie durch Messung der Trübung nach ASTM D-1003 charakterisiert, als die einer Zusammensetzung, die die gleichen Komponenten besitzt, außer dass ein Homopolypropylen oder Interpolymer der gleichen Zusammensetzung wie der des ersten Polymers ohne das nicht konjugierte Polyen das Homopolypropylen oder Interpolymer ersetzt.

13. Produktgegenstand umfassend einen blasgeformten, warmgeformten, extrudierten, gegossenen oder geschmolzenen Gegenstand, der aus mindestens einem amorphen Polymer nach einem der Ansprüche 8-12 als Folie bearbeitet oder gebildet ist.

## Revendications

1. Procédé **caractérisé en ce qu'**il comporte une étape (a) où l'on met en contact une oléfine comprenant du propylène et au moins un polyène non-conjugué polymérisable, en présence d'au moins un catalyseur de formation de polypropylène amorphe, à base d'un métal de transition et contenant de 1 à 3 groupes ligands neutres ou anioniques à liaisons π, dans des conditions de polymérisation, pour obtenir en résultat un polymère amorphe comportant au moins 90 % en moles de motifs moléculaires dérivés du propylène (ci-après "motifs de proplène"), ainsi que des motifs moléculaires dérivés du polyène (ci-après "motifs de polyène").

2. Procédé conforme à la revendication 1, dans lequel le polymère amorphe résultant comporte au moins 90 % en moles de motifs de propylène et au moins 0,007 % en moles de motifs de polyène, et dans lequel le polyène non-conjugué possède une chaîne suffisamment longue pour former de façon prépondérante des ramifications du type en H, avec un nombre minimal de cycles intracaténaires.

3. Procédé conforme à la revendication 1, lequel procédé se déroule dans un réacteur de polymérisation et consiste à faire polymériser
a) au moins une mono-oléfine, choisie dans l'ensemble formé par du propylène et les combinaisons de propylène et d'α-oléfines ou d'oléfines cycliques,
et b) un polyène non-conjugué, qui est linéaire, ramifié ou cyclique et qui comporte d'au moins 7 jusqu'à 35 atomes de carbone, ainsi que deux doubles liaisons polymérisables, indépendamment choisies parmi des doubles liaisons carbone-carbone situées en bout de chaîne et des doubles liaisons carbone-carbone situées dans une structure cyclique contrainte,
en présence d'un catalyseur de formation de polypropylène atactique, à base d'un métal de transition.

4. Procédé conforme à l'une des revendications 1 à 3, dans lequel le polyène non-conjugué est choisi parmi les 1,6-heptadiène, 1,7-octadiène, 1,8-nonadiène, 1,9-décadiène, 1,11-dodécadiène, 1,13-tétra-décadiène, 1,3-divinylcyclopentane, 1,2-divinylcyclohexane, 1,3-divinylcyclohexane, 1,4-divinylcyclohexane, 1,5-divinylcyclooctane, 1-allyl-4-vinylcyclohexarie, 1,4-diallylcyclohexane, 1-allyl-5-vinylcyclooctane et 1,5-diallylcyclooctane, les dérivés à substituants alkyle inférieur de ces composés, le norbornadiène (bicyclo[2,2,1]hepta-2,5-diène), le dimère de norbornadiène, le produit de la réaction du 2,5-norbornadiène et du cyclopentadiényl-1,4,4a,5,8,8a-hexahydro-1:4,5:8-diméthano-naphtalène, le divinylbenzène et le divinylsilane, ainsi que les combinaisons de ces composés.

5. Procédé conforme à l'une des revendications 1 à 4, dans lequel le courant d'alimentation envoyé dans le réacteur de polymérisation contient du polyène non-conjugué et de la mono-oléfine en un rapport molaire de 0,007 à 0,1 mole de polyène non-conjugué par mole d'oléfine.

6. Procédé conforme à l'une des revendications 1 à 5, dans lequel le catalyseur comporte un composé de métal de transition contenant au moins un groupe ligand anionique à liaisons π, le métal de transition étant un lanthanide ou un métal des colonnes 3 et 4 qui se trouve à l'état formel d'oxydation +2, +3 ou +4, et le catalyseur comporte de 1 à 3 groupes ligands neutres ou anioniques à liaisons π, dont au moins l'un est un groupe ligand anionique à liaisons π délocalisées, cyclique ou non cyclique, choisi parmi les groupes cyclopentadiényle, indényle, fluorényle, tétrahydroindényle, tétrahydrofluorényle, octahydrofluorényle, pentadiényle, cyclohexadiényle, dihydroanthracényle, hexahydroanthracényle et décahydroanthracényle, les dérivés à substituants hydrocarbyle en C₁₋₁₀ ou (hydrocarbyle en C₁₋₁₀)-silyle de ces groupes, et leurs combinaisons.

7. Procédé conforme à l'une des revendications 1 à 6, lequel comporte une autre étape (b) où l'on met, dans des conditions de polymérisation par addition, un monomère polymérisable en contact avec un catalyseur différent du catalyseur de formation de polypropylène atactique, à base d'un métal de transition, utilisé dans l'étape (a), cette étape (b) précédant ou suivant l'étape (a).

8. Polymère amorphe qu'on peut obtenir en mettant en oeuvre un procédé conforme à l'une des revendications 1 à 7.

9. Polymère amorphe conforme à la revendication 8, qui comporte des motifs de propylène et des motifs moléculaires dérivés d'au moins un polyène non-conjugué polymérisable, et qui est amorphe comme l'indique, en analyse par AED, l'absence de pic de fusion et la valeur de O J/g pour la chaleur de fusion, lequel polymère amorphe comporte au moins 90 % en moles de motifs de propylène et d'au moins 0,007 à 0,1 % en moles de motifs de polyène, ce polyène non-conjugué possédant une chaîne suffisamment longue pour être incorporé de façon prépondérante sous forme de ramifications du type en H, ce polyène non-conjugué comportant d'au moins 7 à 35 atomes de carbone, la proportion de ce polyène non-conjugué incorporée dans le polymère amorphe sous forme de cycles intramoléculaires ne dépassant pas 15 %, et lequel polymère amorphe présente un indice de fluidité à chaud MFR de 0,001 à 50 g/10 min et un indice de polymolécularité M_{w}/Mₙ, déterminé par chromatographie par perméation de gel, de 1,8 à 5.

10. Polymère amorphe conforme à la revendication 8 ou 9, qui, comparé à un interpolymère constitué des mêmes composants sauf le polyène non-conjugué et présentant le même indice de fluidité à chaud MFR, présente une masse moléculaire moyenne en nombre inférieure à celle de cet interpolymère, une tension à chaud supérieure d'au moins 30 % à celle de cet interpolymère, une résistance à chaud plus élevée, et une viscosité à haut gradient de vitesse de cisaillement au moins équivalente.

11. Composition de matière, comprenant un polymère amorphe conforme à l'une des revendications 8 à 10 (ci-après "premier polymère") et au moins un polymère synthétique ou naturel dont la composition est différente de celle du premier polymère.

12. Composition conforme à la revendication 11, qui présente:
- un rapport de la viscosité à bas gradient de vitesse de cisaillement (1 Hz) à la viscosité à haut gradient de vitesse de cisaillement (100 Hz) supérieur à celui d'une composition constituée des mêmes composants, sauf qu'un homopolypropylène ou interpolymère de même composition que le premier polymère, mais sans le polyène non-conjugué, remplace l'homopolypropylène ou interpolymère ;
- une élasticité à chaud, mesurée par la tension à chaud; plus grande que celle d'une composition constituée des mêmes composants, sauf qu'un homopolypropylène ou interpolymère de même composition que le premier polymère, mais sans le polyène non-conjugué, remplace l'homopolypropylène ou interpolymère ;
- ou une transparence, **caractérisée par** la mesure de turbidité décrite dans la norme ASTM D-1003, plus forte que celle d'une composition constituée des mêmes composants, sauf qu'un homopolypropylène ou interpolymère de même composition que le premier polymère, mais sans le polyène non-conjugué, remplace l'homopolypropylène ou interpolymère.

13. Article de fabrication comprenant un objet obtenu sous forme de film, à partir d'au moins un polymère amorphe conforme à l'une des revendications 8 à 12, par moulage par soufflage, thermoformage, extrusion, coulée ou traitement ou façonnage à l'état fondu.
